# EUROPEAN PATENT APPLICATION

(11) **EP 3 522 069 A1**
(43) Date of publication of application: **07.08.2019**
(21) Application number: 18199273.6
(22) Date of filing: 09.10.2018
(51) Int. Cl.: G06K 9/00, G06Q 30/06

(54) **SYSTEMS AND METHODS FOR RECOMMENDING PRODUCTS BASED ON FACIAL ANALYSIS**

(30) Priority: 06.02.2018 US 201862626924 P; 23.05.2018 US 201815986941
(71) Applicant: Perfect Corp., 231 New Taipei City (TW)
(72) Inventor: Chang, Tzu-Chieh, 701 Tainan City (TW); Lin, Yi-Wei, 231 New Taipei City (TW); Huang, Pei-Wen, Taipei City (TW); Chen, Ping-Xing, 326 Taoyuan City (TW)
(74) Representative: Stöckeler, Ferdinand

(57) **Abstract**

In a computing device for recommending products based on facial analysis, use of a front-facing camera of the computing device is monitored. In response to detecting use of the front-facing camera to capture a self-portrait image, the computing device analyzes facial features of a facial region of an individual depicted in the image captured by the front-facing camera. The computing device further accesses corresponding measurement templates for the facial features and apples at least one of the measurement templates to corresponding facial features. The computing device retrieves product identifiers for the facial features corresponding to the at least one applied measurement template. The computing device generates at least one product recommendation based on the retrieved product identifiers and displays the at least one product recommendation on a user interface.

## Description

### CROSS-REFERENCE TO RELATED APPLICATION

This application claims priority to, and the benefit of, U.S. Provisional Patent Application entitled, "Recommend products according to facial features analyzed from user's picture," having Serial No. 62/626,924, filed on February 6, 2018, which is incorporated by reference in its entirety.

### TECHNICAL FIELD

The present disclosure generally relates to product recommendation and more particularly, to systems and methods for recommending products based on facial analysis.

### BACKGROUND

Individuals invest a substantial amount of money in makeup tools and accessories. However, it can be challenging to achieve the same results as a makeup professional given the wide selection of cosmetic products that consumers can choose from.

### SUMMARY

In a computing device for recommending products based on facial analysis, use of a front-facing camera of the computing device is monitored. In response to detecting use of the front-facing camera to capture a self-portrait image, the computing device analyzes facial features of a facial region of an individual depicted in the image captured by the front-facing camera. The computing device further accesses corresponding measurement templates for the facial features and apples at least one of the measurement templates to corresponding facial features. The computing device retrieves product identifiers for the facial features corresponding to the at least one applied measurement template. The computing device generates at least one product recommendation based on the retrieved product identifiers and displays the at least one product recommendation on a user interface.

Another embodiment is a system that comprises a front-facing camera, a memory storing instructions, and a processor coupled to the memory. The processor is configured by the instructions to monitor use of the front-facing camera of the computing device. Responsive to detecting use of the front-facing camera to capture a self-portrait image, the processor is configured to perform the steps of: analyzing facial features of a facial region of an individual depicted in the image captured by the front-facing camera; accessing corresponding measurement templates for the facial features; applying at least one of the measurement templates to corresponding facial features; retrieving product identifiers for the facial features corresponding to the at least one applied measurement template; generating at least one product recommendation based on the retrieved product identifiers; and displaying the at least one product recommendation on a user interface.

Another embodiment is a non-transitory computer-readable storage medium storing instructions to be implemented by a computing device having a processor, wherein the instructions. When executed by the processor, the instructions on the non-transitory computer-readable storage medium cause the computing device to monitor use of a front-facing camera of the computing device. Responsive to detecting use of the front-facing camera to capture a self-portrait image, the processor is configured to perform the steps of: analyzing facial features of a facial region of an individual depicted in the image captured by the front-facing camera; accessing corresponding measurement templates for the facial features; applying at least one of the measurement templates to corresponding facial features; retrieving product identifiers for the facial features corresponding to the at least one applied measurement template; generating at least one product recommendation based on the retrieved product identifiers; and displaying the at least one product recommendation on a user interface.

### BRIEF DESCRIPTION OF THE DRAWINGS

Various aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1 is a block diagram of a computing device for implementing the disclosed cosmetic product recommendation features in accordance with various embodiments.
FIG. 2 illustrates a schematic block diagram of the computing device in FIG. 1 in accordance with various embodiments.
FIG. 3 is a flowchart for product recommendation performed by the computing device of FIG. 1 in accordance with various embodiments.
FIG. 4 illustrates the user holding the computing device whereby a front-facing camera on the computing device captures an image or a video of the user's face in accordance with various embodiments.
FIG. 5 illustrates a measurement template utilized by the computing device of FIG. 1 for determining attributes of the eyes in accordance with various embodiments.
FIG. 6 illustrates a measurement template utilized by the computing device of FIG. 1 for determining the face shape in accordance with various embodiments.
FIG. 7 illustrates a measurement template utilized by the computing device of FIG. 1 for determining attributes of the lips in accordance with various embodiments.
FIG. 8 illustrates a measurement template utilized by the computing device of FIG. 1 for determining attributes of the nose in accordance with various embodiments.
FIG. 9 illustrates an example user interface for providing a recommendation based on the facial feature analysis performed by the computing device of FIG. 1 in accordance with various embodiments.

### DETAILED DESCRIPTION

Various embodiments are disclosed for facilitating the application of makeup by recommending products based on specific facial features of an individual. As described in more detail below, the system detects when the user of a computing device (*e*.*g*., smartphone) equipped with a front-facing camera is utilizing the camera to produce a self-portrait (*i*.*e*., a selfie). In response, the system automatically analyzes attributes of the facial region depicted in the self-portrait where based on the analysis, the system recommends specific cosmetic products tailored to the specific attributes of the individual's face. In some embodiments, measurement templates corresponding to different facial features are utilized, whereby the measurement templates specify one or more target attributes and metrics to analyze for a corresponding facial feature. These target attributes may vary according to different facial features. In some embodiments, cosmetic products are recommended to the user on a feature by feature basis. For example, the shape of the individual's eyes may cause a particular cosmetic product (*e*.*g*., a particular brand of eyeliner) to be recommended to the user, while the shape of the individual's lips may cause another cosmetic product (*e*.*g*., a particular color and brand of lipstick) to be recommended to the user.

In other embodiments, all the facial features may be analyzed as a whole whereby weight values are applied when determining which cosmetic products to recommend to the user. In some instances, cosmetic products that are more heavily weighted may be recommended to the user where other cosmetic products that are compatible with or specifically matched with the recommended cosmetic products may also be recommended to the user. For example, the skin color of the individual may be assigned a higher weight value. Based on the analyzed skin color, a particular cosmetic product (*e*.*g*., a particular color of blush) is recommended to the user. Based on the recommended color of blush, a particular color of lipstick compatible with or matched with the recommended blush may also be recommended to the user even if the recommended lipstick differs from the lipstick that would otherwise be recommended based on attributes of the lips. In this regard, for some embodiments, cosmetic products may be recommended by placing more emphasis on certain facial attributes rather than being recommended on a feature by feature basis.

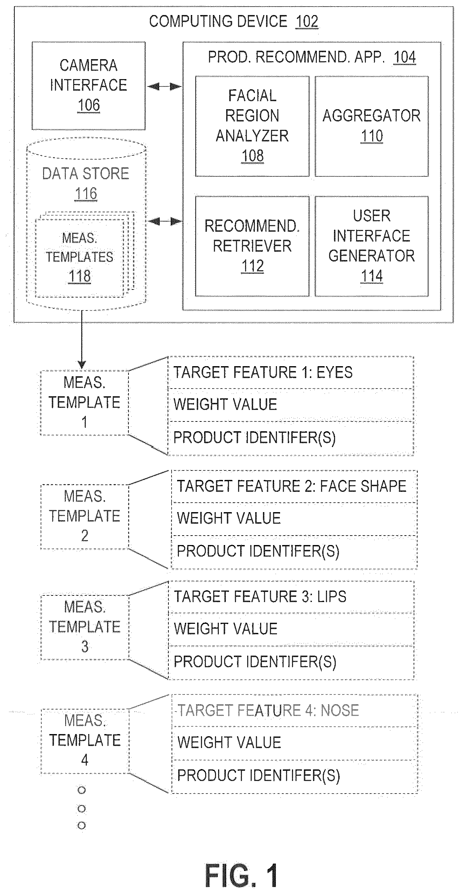

A description of a system for recommending cosmetic products based on facial region analysis is now described followed by a discussion of the operation of the components within the system. FIG. 1 is a block diagram of a computing device 102 in which the makeup application features disclosed herein may be implemented. The computing device 102 may be embodied as a computing device equipped with digital content recording capabilities (*e*.*g*., front-facing camera), where the computing device 102 may include, but is not limited to, a smartphone, a tablet computing device, a laptop computer coupled to a webcam, and so on. The computing device 102 is configured to retrieve a digital representation of the user via a camera interface 106, wherein the digital representation may comprise a still image or live video of the user. The camera interface 106 is communicatively coupled to a camera (*e*.*g*., front-facing camera) of the computing device 102.

As one of ordinary skill will appreciate, the digital media content may be encoded in any of a number of formats including, but not limited to, JPEG (Joint Photographic Experts Group) files, TIFF (Tagged Image File Format) files, PNG (Portable Network Graphics) files, GIF (Graphics Interchange Format) files, BMP (bitmap) files, HEIF (High Efficiency Image File) files, or any number of other digital formats. The digital media content may be encoded in other formats including, but not limited to, Motion Picture Experts Group (MPEG)-1, MPEG-2, MPEG-4, H.264, H.265, HEVC (High Efficiency Video Coding), Third Generation Partnership Project (3GPP), 3GPP-2, Standard-Definition Video (SD-Video), High-Definition Video (HD-Video), Digital Versatile Disc (DVD) multimedia, High-Definition Digital Versatile Disc (HD-DVD) multimedia, Digital Television Video / High-definition Digital Television (DTV/HDTV) multimedia, Audio Video Interleave (AVI), Digital Video (DV), QuickTime (QT) file, Windows Media Video (WMV), Advanced System Format (ASF), Real Media (RM), Flash Media (FLV), an MPEG Audio Layer III (MP3), an MPEG Audio Layer II (MP2), Waveform Audio Format (WAV), Windows Media Audio (WMA), or any number of other digital formats.

A product recommendation application 104 executes on a processor of the computing device 102 and configures the processor to perform various operations relating to the analysis of facial features and the recommendation of cosmetic products. The product recommendation application 104 includes a facial region analyzer 108, an aggregator 110, a recommendation retriever 112, and a user interface generator 114. The camera interface 106 monitors use of a front-facing camera (not shown) in the computing device 102. In response to detecting use of the camera by the user to produce a self-portrait, the camera interface 106 outputs a trigger signal to the product recommendation application 104.

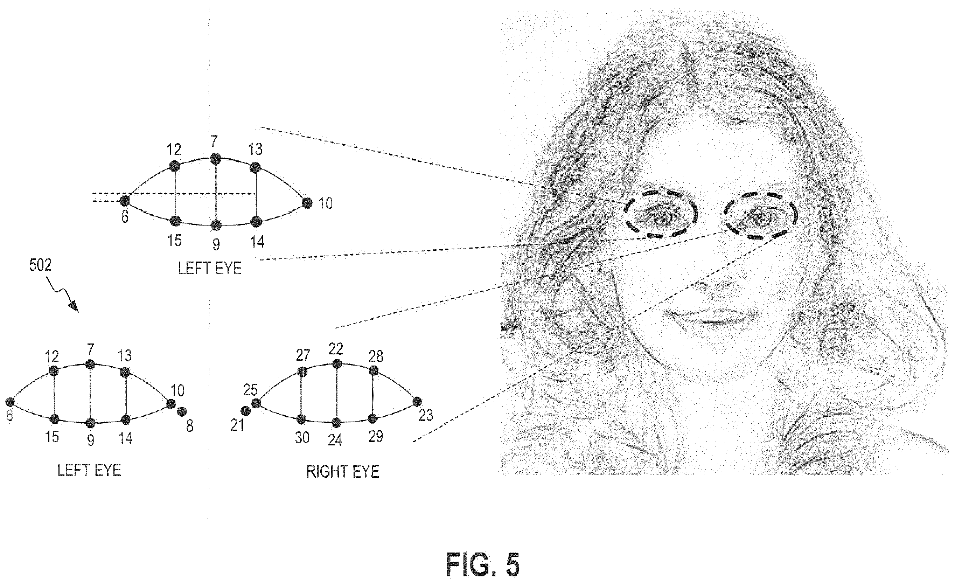

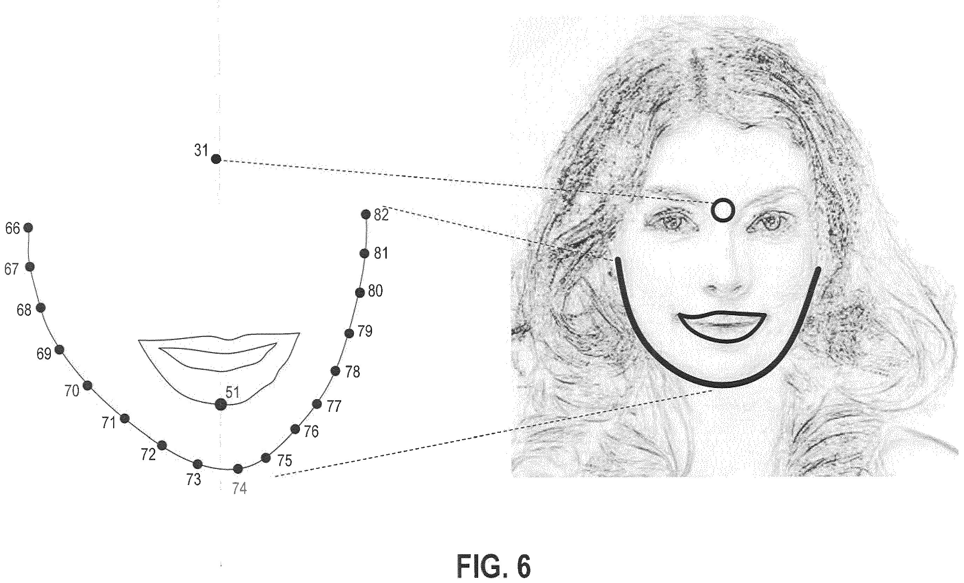

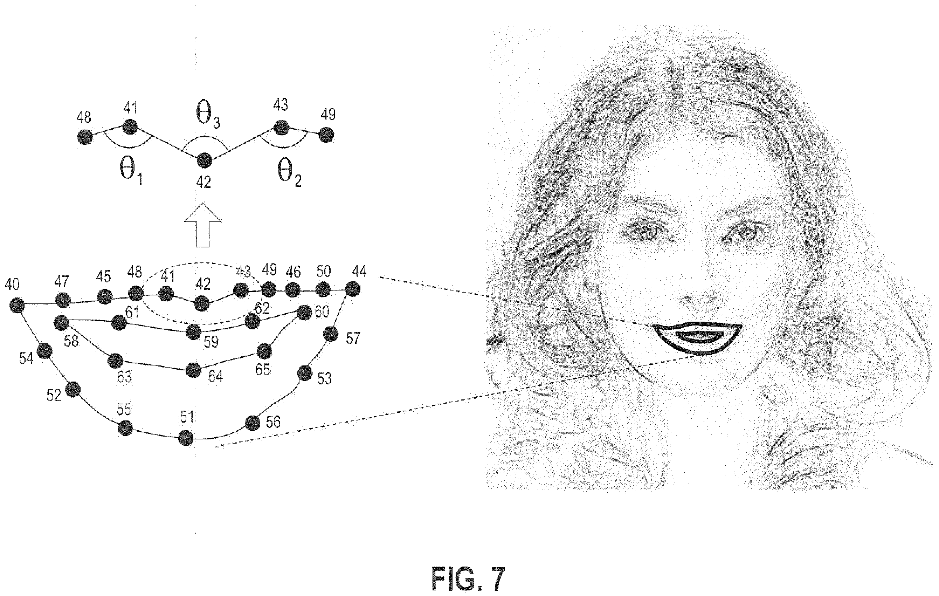

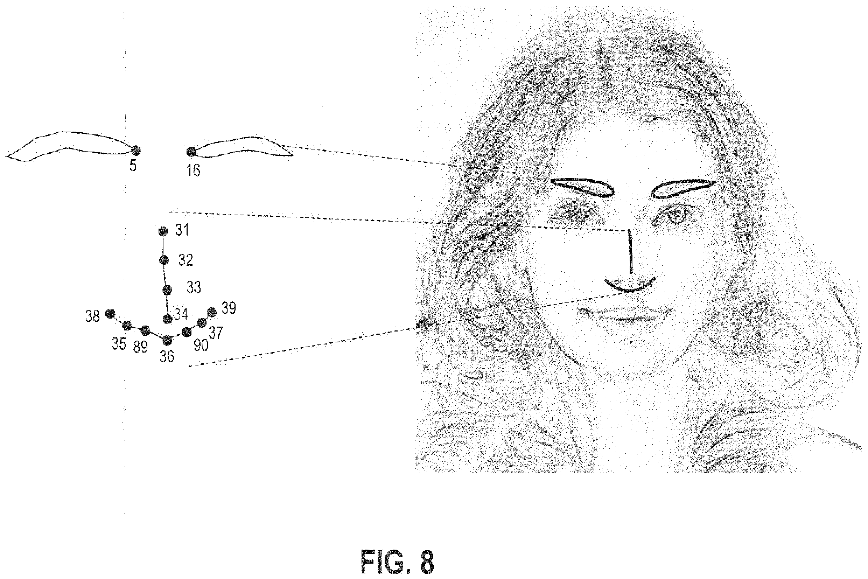

In response to receiving the trigger signal, the facial region analyzer 108 in the product recommendation application 104 is configured to analyze facial features of a facial region of the user depicted in the self-portrait image captured by the front-facing camera. The facial region analyzer 108 is further configured to access a data store 116 in the computing device 102 to retrieve corresponding measurement templates 118 for the facial features. For some embodiments, each measurement template 118 specifies one or more target facial features. One target facial feature may comprise the eyes of the user while another target facial feature may comprise the skin tone of the user. For example, measurement template 1 in FIG. 1 may correspond to the eyes (see FIG. 5), measurement template 2 may correspond to the face shape (see FIG. 6), measurement template 3 may correspond to the lips (see FIG. 7), and measurement template 4 may correspond to the nose (see FIG. 8).

For some embodiments, the measurement template 118 may also include a weight value. In some embodiments, certain facial features may be assigned a greater weight value than other facial features. For example, a facial feature comprising the overall shape of the user's face (*e*.*g*., oval versus round shape) may be assigned a greater weight value than a facial feature comprising the color of the user's hair. As discussed above, for some embodiments, cosmetic products that are more heavily weighted may be recommended to the user. In addition, other cosmetic products that are compatible with or specifically matched with the recommended cosmetic products may also be recommended to the user. The measurement template 118 also includes at least one identifier for a particular cosmetic product (*e*.*g*., a particular color/brand of lipstick) for the corresponding target feature (*e*.*g*., the user's lips). The facial region analyzer 108 is further configured to apply each of the measurement templates to corresponding facial features, as discussed in more detail below.

The aggregator 110 retrieves product identifiers of cosmetic products for each of the facial features based on the applied measurement templates. The product identifiers may comprise such information as a product description (*e*.*g*., brand name, product name, product image), product specifications (*e*.*g*., color, packaging, texture), purchasing information (*e*.*g*., a Uniform Resource Locator (URL) for an online retailer selling the particular product), and so on. The aggregator 110 is further configured to generate at least one product recommendation based on the retrieved product identifiers. The user interface generator 114 displays the at least one product recommendation on a user interface.

The product recommendation application 104 may also include a network interface (not shown) that allows the computing device 102 to be coupled to a network such as, for example, the Internet, intranets, extranets, wide area networks (WANs), local area networks (LANs), wired networks, wireless networks, or other suitable networks, *etc*., or any combination of two or more such networks. Through the network, the computing device 102 may be communicatively coupled to other computing devices for purposes of retrieving updated measurement templates.

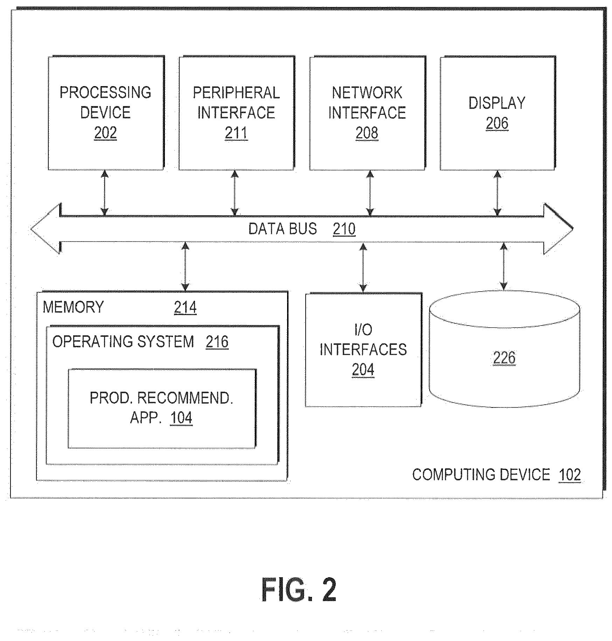

FIG. 2 illustrates a schematic block diagram of the computing device 102 in FIG. 1. The computing device 102 may be embodied in any one of a wide variety of wired and/or wireless computing devices, such as a desktop computer, portable computer, dedicated server computer, multiprocessor computing device, smart phone, tablet, and so forth. As shown in FIG. 2, the computing device 102 comprises memory 214, a processing device 202, input/output interfaces 204, a network interface 208, a display 206, a peripheral interface 211, and mass storage 226, wherein each of these components are connected across a local data bus 210.

The processing device 202 may include any custom made or commercially available processor, a central processing unit (CPU) or an auxiliary processor among several processors associated with the computing device 102, a semiconductor based microprocessor (in the form of a microchip), a macroprocessor, one or more application specific integrated circuits (ASICs), a plurality of suitably configured digital logic gates, and other well known electrical configurations comprising discrete elements both individually and in various combinations to coordinate the overall operation of the computing system.

The memory 214 can include any one of a combination of volatile memory elements (*e*.*g*., random-access memory (RAM, such as DRAM, and SRAM, etc.)) and nonvolatile memory elements (*e*.*g*., ROM, hard drive, tape, CDROM, etc.). The memory 214 typically comprises a native operating system 216, one or more native applications, emulation systems, or emulated applications for any of a variety of operating systems and/or emulated hardware platforms, emulated operating systems, *etc*. For example, the applications may include application specific software which may comprise some or all the components of the computing device 102 depicted in FIG. 1. In accordance with such embodiments, the components are stored in memory 214 and executed by the processing device 202. One of ordinary skill in the art will appreciate that the memory 214 can, and typically will, comprise other components which have been omitted for purposes of brevity.

Input/output interfaces 204 provide any number of interfaces for the input and output of data. For example, where the computing device 102 comprises a personal computer, these components may interface with one or more user input/output interfaces 204, which may comprise a keyboard or a mouse, as shown in FIG. 2. The display 206 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

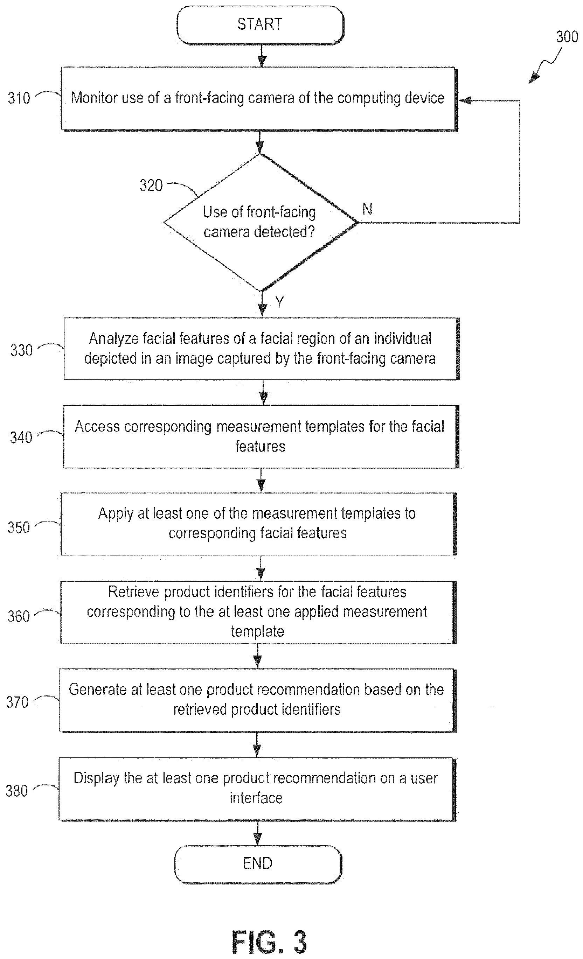

Reference is made to FIG. 3, which is a flowchart 300 in accordance with an embodiment for recommending cosmetic products based on facial region analysis performed by the computing device 102 of FIG. 1. It is understood that the flowchart 300 of FIG. 3 provides merely an example of the different types of functional arrangements that may be employed to implement the operation of the various components of the computing device 102. As an alternative, the flowchart 300 of FIG. 3 may be viewed as depicting an example of steps of a method implemented in the computing device 102 according to one or more embodiments.

Although the flowchart 300 of FIG. 3 shows a specific order of execution, it is understood that the order of execution may differ from that which is depicted. For example, the order of execution of two or more blocks may be scrambled relative to the order shown. Also, two or more blocks shown in succession in FIG. 3 may be executed concurrently or with partial concurrence. It is understood that all such variations are within the scope of the present disclosure.

In block 310, the computing device 102 monitors for use of a front-facing camera of the computing device 102. In decision block 320, if use of the front-facing camera is detected for producing a self-portrait image, the process proceeds to block 330, where the computing device 102 analyzes facial features of a facial region of an individual depicted in the image captured by the front-facing camera. If use of the front-facing camera is not detected, the computing device 102 continues to monitor for use of the front-facing camera (block 310).

In block 340, the computing device 102 accesses the data store 116 (FIG. 1) to retrieve corresponding measurement templates for the facial features. For some embodiments, the facial features comprise facial features selected by the user. For other embodiments, the facial features may comprise a predetermined grouping of target facial features. For some embodiments, each of the measurement templates specifies one or more target attributes to analyze for a corresponding facial feature. The corresponding facial feature may comprise eyes in the facial region, where the one or more target attributes for the measurement template comprise distance measurements involving pairs of points located around a boundary of each eye.

For some embodiments, the corresponding facial feature comprises eyes in the facial region, where the one or more target attributes for the measurement template comprise curvature measurements at a point on a boundary of each eye for determining whether the eyes are approximately almond shaped or round. The one or more target attributes for the measurement template may comprise a ratio between a width of each eye and a height of each eye.

For some embodiments, the corresponding facial feature comprises skin in the facial region, and wherein the one or more target attributes for the measurement template comprise skin tone. For some embodiments, the corresponding facial feature may comprise the entire facial region, where the one or more target attributes for the measurement template comprise a face shape. The corresponding facial feature may also comprise lips in the facial region, where the one or more target attributes for the measurement template comprise a lip contour or a lip color. The one or more target attributes for the measurement template may also comprise a thickness of an upper lip portion and a thickness of a lower lip portion.

In block 350, the computing device 102 applies at least one of the measurement templates to corresponding facial features. In block 360, the computing device 102 retrieves product identifiers for the facial features corresponding to the at least one applied measurement template. In block 370, the computing device 102 generates at least one product recommendation based on the retrieved product identifiers. In block 380, the computing device 102 displays the at least one product recommendation on a user interface. For some embodiments, the computing device 102 displays the at least one product recommendation based on weight values assigned to the facial features. The weight values may comprise predefined values or values specified by a user. Thereafter, the process in FIG. 3 ends.

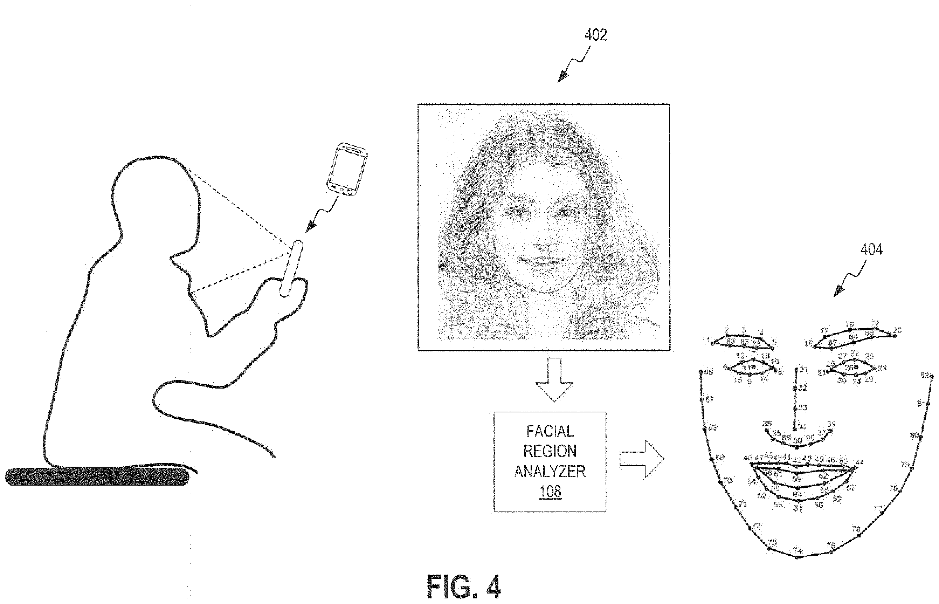

To further illustrate various features, reference is made to FIGS. 4-9. FIG. 4 illustrates the user holding a computing device 102 whereby a front-facing camera on the computing device 102 captures an image or a video of the user's face in accordance with various embodiments. As discussed above, the computing device 102 monitors for use of a front-facing camera of the computing device 102. If use of the front-facing camera is detected whereby a self-portrait image 402 is captured, the computing device 102 analyzes facial features of a facial region of an individual depicted in the self-portrait image. The computing device 102 accesses a data store 116 (FIG. 1) to retrieve measurement templates corresponding to different facial features.

For some embodiments, boundaries 404 are generated by the facial region analyzer 108 around target facial features (*e*.*g*., the eyes, nose, eyebrows, lips, outline of the face) based on measurement points and spacing of these points specified in measurement templates. Boundaries 404 comprise feature points in the facial region of the individual in the image 402. In this regard, boundaries 404 provide a facial contour of the individual in the image 402, where the image 402 is analyzed to generate the boundaries 404 and corresponding facial features points. For some embodiments, the measurement templates may define the number of points as well as the spacing between points. In this regard, the spacing between points of the boundaries 404 (*e*.*g*., P40, P47, P45) may be predefined in the measurement templates.

FIG. 5 illustrates a measurement template utilized by the computing device of FIG. 1 for determining attributes of the eyes in accordance with various embodiments. In the example shown, the measurement template specifies a total of nine measurement points (*e*.*g*., P6, P12, P7, P13, P10, P14, P9, P15, P8) around or near each eye. The measurement template may also specify the spacing between each of these points. For example, one measurement template may specify that three measurement points (*e*.*g*., P12, P7, P13) are to be located between the two ends of the left eye (*e*.*g*., P6, P10). The actual placement of each point will then depend on the contour of the eye region being analyzed. In the example shown, boundaries 502 are generated that track the shape of each eye, whereby metrics relating to different points along the boundaries are analyzed to determine attributes of the eyes. For example, to determine where the individual has downturned eyes (almond-shaped eyes with a downward tilt at the outer corners) versus upturned eyes (oval-shaped eyes with an upward tilt at the outer corners), various metrics relating to the points shown in FIG. 5 are utilized.

For some embodiments, a measurement template defines a line that runs from boundary point (hereinafter "P") P12 to P15, a line that runs from P7 to P9, and a line that runs from P13 to P14. A line that runs from approximately the center of each of these lines is then generated and compared with the position of P6. If P6 is higher than this centerline, the computing device 102 determines that the individual exhibits upturned eyes. If P6 is lower than this centerline, the computing device 102 determines that the individual exhibits downturned eyes.

To determine whether the individual has round versus almond-shaped eyes, another measurement template may define a ratio between the line running from P7 to P9 and the line running from P6 to P10. If this ratio is larger than a predetermined ratio value, the computing device 102 determines that the individual's eye shape is round. If this ratio is less than a predetermined ratio value, the computing device 102 determines that the individual's eye shape is almond shaped. To determine whether the individual has wide set eyes versus close set eyes, the measurement template specifies a metric that compares the distance between P8 and 21 with the distance between P6 and P8. If the distance between P8, P21 is larger than the distance between P6, P8, then the computing device 102 determines that the individual exhibits wide set eyes. If the distance between P8, P21 is less than the distance between P6, P8, then the computing device 102 determines that the individual exhibits close set eyes. In some embodiments, P6 to P10 is defined as a major axis, and P7 to P9 is defined as the minor axis of an ellipse. The computing device 102 determines the curvature of the ellipse at P7. If this curvature is larger than a predetermined value, the eye shape is determined to be round. If this curvature is less than a predetermined value, the eye shape is determined to be almond shaped.

FIG. 6 illustrates a measurement template utilized by the computing device of FIG. 1 for determining the face shape in accordance with various embodiments. For some embodiments, the measurement template defines metrics relating to slopes between various points along the contour shown. For example, to analyze the contour of the jaw, one measurement template defines that the slopes for the following lines are analyzed: line P74 to P70, line P74 to P71, line P74 to P72, line P74 to P73, line P74 to P75, line P74 to P76, line P74 to P77, and line P74 to P78.

The length of half the individual's face is defined as the distance between P31 to P74. The measurement template may further define that the width of the individual's face spans from P66 to P82. The measurement template may further define that the length of the individual's chin spans from P51 to P74, which the width of the individual's chin spans from P70 to P78. Based on various face shape metrics (*e*.*g*., the width of the face, length of the chin, width of the chin) above, the computing device 102 determines the individual's face type (square, oval, long, round, triangular, *etc*.) For some embodiments, the face type (*e*.*g*., square, oval, long, round, triangular) is predefined based on the width of the face, length of chin, width of chin, *etc*.

FIG. 7 illustrates a measurement template utilized by the computing device of FIG. 1 for determining attributes of the lips in accordance with various embodiments. For some embodiments, the measurement template defines metrics relating to the individual's lips to determine such attributes as the lip shape, whether the lips droop (where the corners of the mouth tilt downward), thickness of the upper lip, thickness of the lower lip, and so on. For some embodiments, the measurement template specifies metrics for defining the lip shapes where the thickness of the upper lip corresponds to the distance between P42 and P59 and the thickness of the lower lip corresponds to the distance between P64 and P51.

The peak of the lip is defined by the angle define by the line from P42 to P43 and the line from P43 to P49. The measurement template specifies metrics for determining whether the lips droop by analyzing whether P50 and P60 are lower than P59. The measurement template specifies metrics for determining whether the individual's lips are uneven by analyzing the angle (θ1) defined by the three points P48, P41, and P42. This angle (θ1) is compared with the angle (θ2) defined three points: P42, P43, and P49. If the angles are not substantially equal, the computing device 102 determines that the lips are uneven. The measurement template may also specify the radian of line defined by P54, P52, P55, and P51 and compare whether the radian matches the radian of the line defined by P57, P53, P56, and P51.

The measurement template specifies metrics for determining whether the lips are oval shaped by determining whether the angle (θ3) of the line defined by P42 and P43 and the line defined by P41 and P42 is greater than a threshold (*e*.*g*., 170 degrees). The measurement template specifies metrics for determining whether the upper lip is thick by determining the ratio of the line from upper lip (P42 to P59)and the line from bottom lip (P64 to P51). If the ratio is larger than a predetermined ratio threshold, the computing device 102 determines that the user exhibits a thick upper lip. If the ratio is less than a predetermined ratio threshold, the computing device 102 determines that the user exhibits a thin upper lip, and vice versa for the bottom lip.

FIG. 8 illustrates a measurement template utilized by the computing device of FIG. 1 for determining attributes of the nose in accordance with various embodiments. For some embodiments, the measurement template defines metrics relating to the individual's nose to determine such attributes as the length of the nose, the wing of the nose, the height of the nose, and so on. For some embodiments, the measurement template specifies metrics for defining the length of the nose by analyzing the ratio of the line from P31 to P34 and the length of the face. For some embodiments, the measurement template specifies metrics for defining the wing of the nose (the ala or the lateral surface of the nose) by analyzing the ratio of the line from P31 to P34 and the line from P38 to P39. For some embodiments, the measurement template specifies metrics for defining the height of the nose by analyzing the distance from P31 to the center point of the line from P5 to P16.

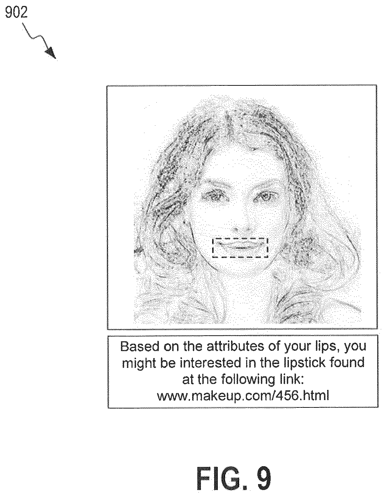

FIG. 9 illustrates an example user interface 902 for providing a recommendation based on the facial feature analysis performed by the computing device 102 of FIG. 1 in accordance with various embodiments. The computing device 102 provides a product recommendation displayed user interface 902 upon analyzing the facial features of the individual using the measurement templates. In some embodiments, the measurement template for deriving attributes of the individual's lips may include a product identifier for a specific cosmetic product (*e*.*g*., lipstick, lip gloss). Based on the product identifier, the computing device 102 generates a specific product recommendation to aid the individual in obtaining the actual product. In the example shown, the user interface 902 provides a recommendation by displaying a URL of an online retailer for a product web page selling a cosmetic product (*e*.*g*., lipstick). Other information provided to the user may include the product stock keeping unit (SKU) code SKU code for a particular brand of lipstick, the color of that particular brand of lipstick, and so on.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A method implemented in a computing device for recommending products based on facial analysis, comprising:
monitoring use of a front-facing camera of the computing device;
responsive to detecting use of the front-facing camera to capture a self-portrait image, performing the steps of:
analyzing facial features of a facial region of an individual depicted in the image captured by the front-facing camera;
accessing corresponding measurement templates for the facial features;
applying at least one of the measurement templates to corresponding facial features;
retrieving product identifiers for the facial features corresponding to the at least one applied measurement template;
generating at least one product recommendation based on the retrieved product identifiers; and
displaying the at least one product recommendation on a user interface.

2. The method of claim 1, wherein each of the measurement templates specifies one or more target attributes to analyze for a corresponding facial feature.

3. The method of claim 2, wherein the corresponding facial feature comprises eyes in the facial region, and wherein the one or more target attributes for the measurement template comprise distance measurements involving pairs of points located around a boundary of each eye.

4. The method of claim 2 or 3, wherein the corresponding facial feature comprises eyes in the facial region, and wherein the one or more target attributes for the measurement template comprise curvature measurements at a point on a boundary of each eye for determining whether the eyes are approximately almond shaped or round.

5. The method of claim 3, wherein the one or more target attributes for the measurement template comprise a ratio between a width of each eye and a height of each eye.

6. The method of one of claims 2 to 5, wherein the corresponding facial feature comprises skin in the facial region, and wherein the one or more target attributes for the measurement template comprise skin tone.

7. The method of one of claims 2 to 6, wherein the corresponding facial feature comprises the entire facial region, and wherein the one or more target attributes for the measurement template comprise a face shape.

8. The method of one of claims 2 to 7, wherein the corresponding facial feature comprises lips in the facial region, and wherein the one or more target attributes for the measurement template comprise a lip contour.

9. The method of one of claims 2 to 8, wherein the corresponding facial feature comprises lips in the facial region, and wherein the one or more target attributes for the measurement template comprise a lip color.

10. The method of one of claims 2 to 9, wherein the corresponding facial feature comprises lips in the facial region, and wherein the one or more target attributes for the measurement template comprise a thickness of an upper lip portion and a thickness of a lower lip portion.

11. The method of one of claims 1 to 10, wherein displaying the at least one product recommendation on the user interface is performed based on weight values assigned to the facial features.

12. The method of claim 11, wherein the weight values comprise one of: predefined values; or values specified by a user.

13. The method of one of claims 1 to 12, wherein the facial features comprise facial features selected by a user of the computing device.

14. A system, comprising:
a front-facing camera;
a memory storing instructions; and
a processor coupled to the memory and configured by the instructions to at least perform a method according to one of claims 1 to 13.

15. A non-transitory computer-readable storage medium storing instructions to be implemented by a computing device having a processor, wherein the instructions, when executed by the processor, cause the computing device to at least perform a method of one of claims 1 to 13.
